(19) Europäisches Patentamt / European Patent Office / Office européen des brevets

(11) **EP 1 457 317 B1**

(12) **EUROPÄISCHE PATENTSCHRIFT**

(45) Veröffentlichungstag und Bekanntmachung des Hinweises auf die Patenterteilung:
**13.06.2007  Patentblatt 2007/24**

(51) Int Cl.:
*B32B 27/34* *(2006.01)*        *B32B 27/08* *(2006.01)*
*B32B 27/30* *(2006.01)*

(21) Anmeldenummer: **04000705.6**

(22) Anmeldetag: **15.01.2004**

(54) **Polyesterfolie mit verbesserter Sauerstoffbarriere, enthaltend Poly(m-xylol-adipinamid) sowie eine Deckschicht und eine Barrierebeschichtung, Verfahren zu ihrer Herstellung und ihre Verwendung**

Polyester film with improved oxygen-barrier properties, which comprises polymetaxylylene adipamide as well as a cover layer and a barrier coating, its method of making and use

Film polyester comprenant du polymétaxylylène adipamide, ainsi qu'une couche de protection et un revêtement barrière, et présentant des propriétés barrière à l'oxygène améliorées, son procédé de fabrication et son utilisation

(84) Benannte Vertragsstaaten:
**DE GB**

(30) Priorität: **21.01.2003  DE 10302035**

(43) Veröffentlichungstag der Anmeldung:
**15.09.2004  Patentblatt 2004/38**

(73) Patentinhaber: **Mitsubishi Polyester Film GmbH 65203 Wiesbaden (DE)**

(72) Erfinder:
• **Klein, Oliver, Dr.**
  **55126 Mainz (DE)**
• **Peiffer, Herbert, Dr., Professor**
  **55126 Mainz (DE)**
• **Hilkert, Gottfried, Dr.**
  **55291 Saulheim (DE)**

(74) Vertreter: **Schweitzer, Klaus et al Zounek Plate Schweitzer Patentanwaltskanzlei Rheingaustrasse 196 65203 Wiesbaden (DE)**

(56) Entgegenhaltungen:
**WO-A-01/92011        WO-A-02/38673**

• **DATABASE WPI Section Ch, Week 198401 Derwent Publications Ltd., London, GB; Class A23, AN 1984-002155 XP002276539 & JP 58 197050 A (TOYOBO KK) 16. November 1983 (1983-11-16)**
• **DATABASE WPI Section Ch, Week 199414 Derwent Publications Ltd., London, GB; Class A14, AN 1994-114850 XP002276645 & JP 06 064098 A (DENKI KAGAKU KOGYO KK) 8. März 1994 (1994-03-08)**

**Beschreibung**

Die Erfindung betrifft eine mehrschichtige, transparente, biaxial orientierte Polyesterfolie mit einer Basisschicht (B) und mindestens einer auf dieser Basisschicht (B) aufgebrachten Deckschicht (A). Zumindest die Basisschicht (B) enthält neben Polyester als zusätzliches Polymer Poly(m-xylol-adipinamid) (MXD6). Die Deckschicht (A) ist mit einer Barriereschicht (D) beschichtet, die aus einem Blend besteht, der Polyvinylalkohol und ein Copolymer aus Maleinsäure und Acrylsäure enthält. Die Erfindung betrifft weiterhin ein Verfahren zur Herstellung der Folie und ihre Verwendung.

Transparente, biaxial orientierte Polyesterfolien, die sich durch verbesserte Barriereeigenschaften auszeichnen, sind nach dem Stand der Technik bekannt. In den meisten Fällen erhalten die Folien ihre verbesserten Barriereeigenschaften off-line nach der Herstellung durch einen weiteren Verarbeitungsschritt. Beispiele hierfür sind die Extrusionsbeschichtung, die Beschichtung oder Laminierung mit Barrierematerialien, die Beschichtung im Vakuum mit Metallen oder mit keramischen Substanzen oder die Plasmapolymerisation in Verbindung mit der Vakuumbeschichtung.

Eine Ausnahme hiervon bildet das in der WO 99/62694 näher beschriebene Verfahren, bei dem eine mehrschichtige, koextrudierte Polyesterfolie, die mindestens eine Schicht aus EVOH (Ethylen-Vinyl-Alkohol) enthält, simultan biaxial verstreckt wird. Die Folie zeichnet sich durch gute mechanische Eigenschaften, insbesondere aber durch gute Barriereeigenschaften gegen den Durchtritt von Sauerstoff, aus. Als bester Wert für die erzielbare Sauerstoffdurchlässigkeit OTR (engl. Oxygen Transmission Rate) werden in der Schrift 5 cm$^3$/(m$^2$·bar·d) angegeben. Nachteilig an dem Verfahren ist, dass das bei der Herstellung anfallende Regenerat dem Prozess nicht wieder zugeführt werden kann, ohne dass die Folie ihre guten optischen Eigenschaften verliert.

Eine weitere Ausnahme bildet die in der JP 2001-347592 beschriebene biaxial orientierte Folie, die aus einer Mischung von Polyethylenterephthalat und Poly(m-xylol-adipinamid) (MXD6) besteht. Der Anteil von Poly(m-xylol-adipinamid) (MXD6) in der Folie liegt zwischen 10 und 40 Gew.-% und der entsprechende Anteil von Polyethylenterephthalat zwischen 60 und 90 Gew.-%. Die Folie ist simultan biaxial verstreckt. Sie zeichnet sich durch gute mechanische Eigenschaften, durch eine hohe thermische Stabilität, insbesondere aber durch eine gute Barriere hinsichtlich der Permeation von Sauerstoff, aus. Mit der Folie wird eine Sauerstoffdurchlässigkeit OTR erzielt, die kleiner als 30 cm$^3$/(m$^2$·bar·d) ist. Außerdem zeichnet sich die Folie durch eine niedrige Trübung aus. In der Schrift wird für die Trübung ein Wert angegeben, der unterhalb von 15 % liegt. Nachteilig an der Folie sind ihre beiden rauen Oberflächen, die durch die Mischungsunverträglichkeit der beiden Rohstoffe (Polyethylenterephthalat und Poly(m-xylol-adipinamid) (MXD6)) entstehen. Durch die hohen Rauigkeitswerte verliert die Folie ihren ursprünglich hohen Glanz und erhält ein mattes Aussehen, was für viele Anwendungen in der Verpackungsindustrie unerwünscht ist. Von weiterem Nachteil an der Folie ist, dass sie nicht so gut bedruckbar, metallisierbar oder zu beschichten ist wie Folien, die z.B. nur aus Polyethylenterephthalat bestehen. Bedingt durch die hohe Rauigkeit der beiden Folienoberflächen ist die Dickenverteilung von zusätzlich aufgebrachten Schichten (Druckfarben, Metalle, Lack, keramische Materialien) unzureichend. Hierdurch verschlechtern sich die physikalischen Eigenschaften dieser Schichten ebenfalls.

Ebenfalls eine Ausnahme bildet die Folie nach der EP-B-0 675 158, bei der es sich um eine gereckte Verbundfolie auf Polyesterbasis mit verbesserten Barriereeigenschaften gegenüber Gasen handelt. Die Folie ist zumindest auf einer der beiden Seiten mit einer 0,3 μm oder weniger dicken Schicht aus Polyvinylalkohol überzogen, der einen zahlenmäßigen mittleren Polymerisationsgrad von 350 und mehr hat, wobei die mittlere Rauigkeit R$_z$ der zu beschichteten Seite der Basisfolie 0,30 μm oder weniger beträgt und wobei diese Seite durch eine bestimmte Verteilung der Erhebungen auf der Folienoberfläche gekennzeichnet ist. Die Verbundfolie weist eine Sauerstoffdurchlässigkeit auf, die weniger als 3 cm$^3$/(m$^2$·bar·d) beträgt. Nachteilig an dieser Verbundfolie ist ihre geringe Beständigkeit z.B. gegenüber Feuchtigkeit. Bei Kontakt mit Wasser oder Wasserdampf geht die Haftung der Barrierebeschichtung aus Polyvinylalkohol zur Polyesterfolie verloren mit dem Effekt, dass die Barrierebeschichtung von der Polyesterfolie abwaschbar ist.

WO-A-0238673 beschreibt eine mehrschichtige Verpackungsfolie, die aus zwei äusseren PET-Schichten und einer dazwischen liegenden Barrierschicht aus einer Mischung aus PET und MXD6 aufgebaut ist.

JP-A-6064098 beschreibt einen öl-und hitzbeständigen Verbund, der eine MXD6 Schicht und eine Schicht aus einer Mischung aus Elastomer, PvDF und Epoxid enthält.

Aufgabe der vorliegenden Erfindung war es, eine biaxial orientierte Polyesterfolie zur Verfügung zu stellen, die sich durch sehr gute Barriereeigenschaften auszeichnet, insbesondere gegenüber dem Durchtritt von Sauerstoff. Sie sollte die Nachteile der Folien nach dem Stand der Technik nicht mehr aufweisen und sich insbesondere dadurch auszeichnen, dass

- zumindest eine der beiden Folienoberflächen Rauigkeitswerte aufweist, die so niedrig sind, dass die Folie z.B. gut bedruckbar, gut zu metallisieren oder gut zu beschichten ist, ohne dass diese zusätzliche Funktionsschicht in ihrer Wirkung beeinträchtigt wird;
- zumindest eine der beiden Folienoberflächen einen entsprechend hohen Glanz aufweist, so dass die Folie ohne nennenswerte Einschränkung für die Verpackungsanwendung eingesetzt werden kann;
- sich die Folie wirtschaftlich herstellen lässt, dies bedeutet beispielsweise auch, dass zur Herstellung der Folie in der Industrie übliche (in der Regel sequenzielle) Streckverfahren eingesetzt werden können, ohne sich dabei auf das teure simultane Streckverfahren einschränken zu müssen;

- eine gute Haftung zwischen den einzelnen Schichten der Folie für deren praktische Anwendbarkeit gewährleistet ist, auch nach Kontakt der Folie mit Feuchtigkeit; insbesondere sollten durch den Feuchtigkeitskontakt die Barriereeigenschaften nicht drastisch verschlechtert werden;

- bei der Herstellung der Folie gewährleistet ist, dass das Regenerat in einer Menge von bis zu 60 Gew.-% wieder der Extrusion zugeführt werden kann, ohne dass dabei die physikalischen und optischen Eigenschaften der Folie, insbesondere aber die Barriere gegenüber Sauerstoff, nennenswert negativ beeinflusst werden.

Andererseits sollten sich gleichzeitig die anderen, Polyesterfolien auszeichnenden Eigenschaften nicht verschlechtern. Hierzu gehören beispielsweise die mechanischen und die thermischen Eigenschaften, das Wickelverhalten und die Verarbeitbarkeit der Folie, insbesondere bei der Bedruckung, Kaschierung oder der Beschichtung mit metallischen oder keramischen Materialien.

Gelöst wird die Aufgabe durch eine biaxial orientierte Polyesterfolie, die eine Basisschicht (B) und mindestens eine auf dieser Basisschicht (B) aufgebrachte Deckschicht (A) aufweist, die mit einer Barriereschicht (D) beschichtet ist, dadurch gekennzeichnet, dass die Basisschicht (B) Poly(m-xylol-adipinamid) (MXD6) enthält und die Barriereschicht (D) aus einem Blend besteht, der eine filmbildende Substanz und ein Copolymer aus Maleinsäure und Acrylsäure enthält.

Die Basisschicht (B) enthält ferner thermoplastischen Polyester, bevorzugt zu mindestens 60 Gew.-% und bezogen auf das Gewicht der Schicht (B). Der Anteil an Poly(m-xylol-adipinamid) in der Basisschicht beträgt bevorzugt 5 bis 40 Gew.-%, bezogen auf das Gewicht der Schicht (B). Bei der filmbildenden Substanz handelt es sich bevorzugt um Polyvinylalkohol.

Poly(m-xylol-adipinamid) (MXD6), auch als Poly-m-Xylylen-adipinamid oder PA-MXD6 bezeichnet, ist ein Polykondensationsprodukt (Polyarylamid) aus m-Xylylendiamin und Adipinsäure und wird in verschiedenen Typen auf dem Markt angeboten, die grundsätzlich alle für den erfindungsgemäßen Zweck geeignet sind. Bevorzugt werden Typen mit einer Schmelzviskostitä von kleiner als 2000 Poise.

Die mehrschichtige, biaxial orientierte, transparente Polyesterfolie nach der vorliegenden Erfindung weist gegenüber Folien nach dem Stand der Technik verbesserte optische Eigenschaften, insbesondere einen erhöhten Glanz, auf (zumindest auf einer Folienoberfläche). Darüber hinaus zeichnet sich die Folie durch hervorragende Barriereeigenschaften, insbesondere gegenüber dem Durchtritt von Sauerstoff, aus. Dabei ist eine Mindesthaftung zwischen den jeweiligen Schichten der Folie von größer als 0,5 N/25mm gewährleistet, auch nach Kontakt mit Feuchtigkeit. Dies gilt auch für die Haftung zwischen den Schichten (A) und (D).

Die Folie besitzt eine Sauerstoffbarriere von bevorzugt kleiner als 25 cm$^3$/(m$^2$·d·bar), vorzugsweise kleiner als 20 cm$^3$/(m$^2$·d·bar) und besonders bevorzugt kleiner als 15 cm$^3$/(m$^2$·d·bar).

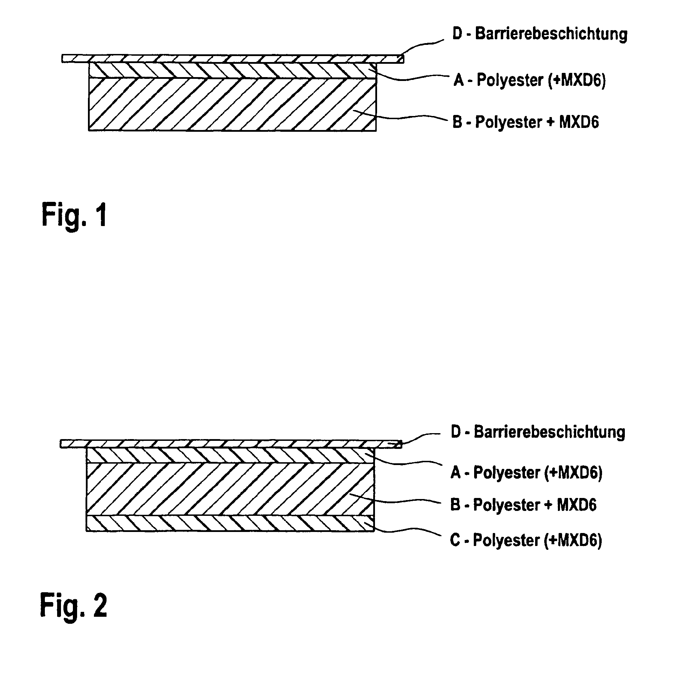

Die Folie nach der vorliegenden Erfindung besteht zumindest aus der erfindungsgemäßen Basisschicht (B), der erfindungsgemäßen Deckschicht (A) und der erfindungsgemäßen Beschichtung (D). In diesem Fall ist die Folie dreischichtig aufgebaut (vgl. Figur 1). In einer bevorzugten Ausführungsform ist die Folie vier- oder mehr als vierschichtig aufgebaut (vgl. Figur 2). Sie besteht dann aus der erfindungsgemäßen Basisschicht (B), den beiden erfindungsgemäßen Deckschichten (A) und (C) und der erfindungsgemäßen Beschichtung (D) sowie gegebenenfalls weiteren Zwischenschichten (E, F, ...). Die Deckschichten (A) und (C) können gleich oder verschieden und die Schicht (C) kann z. B. auch mit einer Beschichtung (D) versehen sein.

Die Basisschicht der Folie besteht bevorzugt zu mindestens 60 Gew.-% aus thermoplastischem Polyester (= Komponente I). Dafür geeignet sind z.B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bishydroxymethyl-cyclohexan und Terephthalsäure (= Poly-1,4-cyclohexandimethylen-terephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 90 Mol-%, besonders bevorzugt zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. anderen Dicarbonsäuren. In vorteilhafter Weise können für die Komponente I der Basisschicht (B) auch Copolymere oder Mischungen oder Blends aus den genannten Homo- und/oder Copolymeren verwendet werden.

Besonders vorteilhaft ist es für den zuletzt genannten Fall, wenn in der Basisschicht (B) als Komponente I ein Polyester-Copolymer auf Basis von Isophthalsäure und Terephthalsäure oder auf Basis von Terephthalsäure und Naphthalin-2,6-dicarbonsäure verwendet wird. In diesem Fall ist die Herstellbarkeit der Folie gut und die optischen Eigenschaften der Folie sowie die erzielten Barriereeigenschaften der Folie besonders gut.

In diesem Fall enthält die Basisschicht (B) im wesentlichen als Komponente I ein Polyestercopolymeres, das überwiegend aus Isophthalsäure- und Terephthalsäure-Einheiten und/oder Terephthalsäure- und Naphthalin-2,6-dicarbonsäure-Einheiten und aus Ethylenglykol-Einheiten zusammengesetzt ist und als Komponente II das zuvor genannte erfindungsgemäße Poly(m-xylol-adipinamid) (MXD6).

Die bevorzugten Copolyester, die die gewünschten Eigenschaften der Folie bereitstellen (insbesondere die Optik, gemeinsame Verstreckbarkeit), sind solche, die aus Terephthalat- und Isophthalat-Einheiten und aus Ethylenglykol-Einheiten aufgebaut sind. Der Anteil an Ethylenterephthalat in diesen Copolymeren beträgt bevorzugt 40 bis 97 Mol-% und der entsprechende Anteil an Ethylenisophthalat 60 bis 3 Mol-%. Bevorzugt sind Copolyester, bei denen der Anteil an Ethylenterephthalat 50 bis 95 Mol-% und der entsprechende Anteil an Ethylenisophthalat 50 bis 5 Mol-% beträgt, und ganz bevorzugt sind Copolyester, bei denen der Anteil an Ethylenterephthalat 60 bis 90 Mol-% und der entsprechende Anteil an Ethylenisophthalat 40 bis 10 Mol-% beträgt.

Geeignete andere aliphatische Diole, die Bestandteile der erfindungsgemäßen Polyester sein können, sind beispielsweise Diethylenglykol, Triethylenglykol, aliphatische Glykole der allgemeinen Formel $HO-(CH_2)_n-OH$, wobei n eine ganze Zahl von 2 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Geeignete andere aromatische Dicarbonsäuren, die Bestandteile der erfindungsgemäßen Polyester sein können, sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkanteil geradkettig oder verzweigt sein kann.

Die Herstellung der Polyester kann nach dem bekannten Umesterungsverfahren erfolgen. Dabei geht man von Dicarbonsäureestern und Diolen aus, die mit den üblichen Umesterungskatalysatoren wie Zink-, Calcium-, Lithium- und Mangan-Salze umgesetzt werden. Die Zwischenprodukte werden dann in Gegenwart allgemein üblicher Polykondensationskatalysatoren wie Antimontrioxid oder Titan-Salze polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die Basisschicht (B) als eine weitere Komponente Poly(m-xylol-adipinamid) (MXD6) (= Komponente II) in einer Menge von bevorzugt 5 bis 40 Gew.-%, insbesondere in einer Menge von 6 bis 35 Gew.-% und besonders bevorzugt in einer Menge von 7 bis 30 Gew.-%, bezogen auf das Gewicht der Basisschicht (B).

Für die Verarbeitung der Polymere hat es sich als günstig erwiesen, wenn das Poly(m-xylol-adipinamid) (MXD6) so ausgewählt wird, dass sich die Viskositäten der jeweiligen Polymerschmelzen nicht zu sehr unterscheiden. Im anderen Fall ist unter Umständen mit zusätzlichen ErhebungenNorsprüngen, mit Fließstörungen oder mit Streifenbildung auf der fertigen Folie zu rechnen. Außerdem neigen die Polymere dann zur Entmischung. Entsprechend den hier durchgeführten Experimenten sollte die Schmelzviskosität des Poly(m-xylol-adipinamid) (MXD6) bevorzugt unterhalb von bestimmten Werten liegen. Sehr gute Resultate im Sinne der vorliegenden Erfindung erhält man, wenn die Schmelzviskosität für das MXD6 kleiner als 2000 Poise (gemessen in einem Kapillarrheometer von 0,1 mm Durchmesser, einer Länge von 10 mm und einer Belastung von 10 kg/cm$^2$, Schmelztemperatur 280 °C), bevorzugt kleiner als 1800 Poise und besonders bevorzugt kleiner als 1600 Poise ist.

Entsprechendes gilt auch für die Viskosität des eingesetzten Polyesters. Sehr gute Resultate im Sinne der vorliegenden Erfindung erhält man, wenn die Schmelzviskosität für den Polyester kleiner als 2000 Poise (gemessen in einem Kapillarrheometer von 0,1 mm Durchmesser, einer Länge von 10 mm und einer Belastung von 10 kg/cm$^2$, Schmelztemperatur 280 °C), bevorzugt kleiner als 1800 Poise und besonders bevorzugt kleiner als 1600 Poise ist.

Erfindungsgemäß sollten sich zur Erzielung einer guten Schmelzehomogenität und zur Erzielung einer guten Streckbarkeit die Viskositäten der Ausgangspolymere um nicht mehr als 30 % (absolut gesehen) unterscheiden, bezogen auf die Schmelzeviskosität des eingesetzten Polyesters.

Das Poly(m-xylol-adipinamid) (MXD6) wird zweckmäßigerweise entweder als reines Granulat oder als granuliertes Konzentrat (Masterbatch) in die Folie eingearbeitet. Das Polyestergranulat wird dazu mit dem Poly(m-xylol-adipinamid) (MXD6) bzw. dem Poly(m-xylol-adipinamid) (MXD6)-Masterbatch vorgemischt und anschließend dem Extruder zugeführt. Im Extruder werden die Komponenten weiter vermischt und auf Verarbeitungstemperatur erwärmt. Dabei ist es für das erfindungsgemäße Verfahren zweckmäßig, wenn die Extrusionstemperatur oberhalb der Schmelztemperatur $T_S$ des Poly(m-xylol-adipinamid) (MXD6) liegt, im allgemeinen mindestens 5 °C, vorzugsweise 10 bis 50 °C, insbesondere aber 20 bis 40 °C über der Schmelztemperatur des Poly(m-xylol-adipinamid) (MXD6). Als eine bevorzugte Extrusionseinheit für die Verarbeitung der Mischung bzw. auch für die Herstellung des Masterbatches aus den Komponenten I und II bietet sich der Zweischneckenextruder an.

Die Folie nach der vorliegenden Erfindung ist zumindest dreischichtig aufgebaut. Sie besteht dann aus der erfindungsgemäßen Basisschicht (B), der auf dieser angeordneten erfindungsgemäßen Deckschicht (A) und der auf der Deckschicht (A) angeordneten erfindungsgemäßen Barrierebeschichtung (D). Darüber hinaus kann die Folie zusätzliche Schichten enthalten, die mit Deckschichten oder mit Zwischenschichten bezeichnet werden. Typische Folienaufbauten sind dann z. B. ABAD, DABC, DABD oder DABCD, wobei A und C entsprechende Deckschichten darstellen. Die Deckschichten (A) und (C) oder auch die Schichten (D) können gleich oder verschieden zusammengesetzt sein.

Für die Deckschichten und evtl. Zwischenschichten können prinzipiell die gleichen (Polyester-) Polymere verwendet werden wie für die Basisschicht B. Daneben können in diesen Schichten aber auch andere Materialien enthalten sein, wobei diese dann bevorzugt aus einem Gemisch von Polymeren, Copolymeren oder Homopolymeren bestehen, welches Ethylenisophthalat-Einheiten und/oder Ethylen-2,6-naphthalat-Einheiten und/oder Ethylenterephthalat-Einheiten enthält. Bis zu 10 Mol-% der Polymere können aus weiteren Comonomeren bestehen.

In vorteilhafter Weise können in diesen weiteren Schichten als weitere Komponenten auch (Polyester-) Copolymere oder (Polyester-) Mischungen oder Blends aus Homo- und/oder Copolymeren verwendet werden.

Besonders zweckmäßig ist, wenn in den Deckschichten ein Polyester-Copolymer auf Basis von Isophthalsäure und Terephthalsäure verwendet wird. In diesem Fall sind die optischen Eigenschaften der Folie besonders gut.

In diesem Fall enthalten die Deckschichten der Folie im wesentlichen ein Polyestercopolymeres, das überwiegend aus Isophthalsäure- und Terephthalsäure-Einheiten und aus Ethylenglykol-Einheiten zusammengesetzt ist. Die restlichen Monomereinheiten stammen aus anderen aliphatischen, cycloaliphatischen oder aromatischen Diolen bzw. anderen Dicarbonsäuren, wie sie auch in der Basisschicht vorkommen können. Die bevorzugten Copolyester, die die gewünschten Eigenschaften der Folie bereitstellen (insbesondere die Optik), sind solche, die aus Terephthalat- und Isophthalat-Einheiten und aus Ethylenglykol-Einheiten aufgebaut sind. Der Anteil an Ethylenterephthalat beträgt bevorzugt 40 bis 97 Mol-% und der entsprechende Anteil an Ethylenisophthalat 60 bis 3 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt, und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

In einer weiteren Ausführungsform enthält auch die Deckschicht (A) und gegegebenenfalls auch die Deckschicht (C) als eine weitere Komponente Poly(m-xylol-adipinamid) (MXD6) (= Komponente II) in einer Menge von bevorzugt 0 bis 50 Gew.-%, insbesondere in einer Menge von 2 bis 40 Gew.-% und besonders bevorzugt in einer Menge von 4 bis 30 Gew.-%, bezogen auf das Gewicht der jeweiligen Deckschicht. In einer bevorzugten Ausführungsform der Erfindung enthält die Basisschicht (B) einen höheren Anteil Poly(m-xylol-adipinamid) (MXD6) als die Deckschicht (A) bzw. (C).

Die Dicke der Deckschichten ist bevorzugt größer als 1,0 $\mu$m und liegt bevorzugt im Bereich von 1,5 bis 20 $\mu$m und besonders bevorzugt im Bereich von 2,0 bis 10 $\mu$m.

Die Basisschicht (B), die Deckschichten und evtl. vorhandene Zwischenschichten können zusätzlich übliche Additive wie z. B. Stabilisatoren und Antiblockmittel enthalten. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt. Typische Antiblockmittel (in diesem Zusammenhang auch als Pigmente oder Füllstoffe bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehreren verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen z.B. als glykolische Dispersion während der Polykondensation oder über Masterbatche bei der Extrusion zugegeben werden. Als vorteilhaft haben sich Pigmentkonzentrationen von 0,0001 bis 5 Gew.-% erwiesen, bezogen auf das Gewicht der damit ausgerüsteten Schicht. Eine detaillierte Beschreibung der Antiblockmittel findet sich beispielsweise in der EP-A-0 602 964.

In einer bevorzugten Ausführungsform der Erfindung beträgt der Füllstoffanteil in der Deckschicht (A) weniger als 0,5 Gew.-%, bevorzugt weniger als 0,4 Gew.-% und besonders bevorzugt weniger als 0,3 Gew.-%, bezogen auf des Gewicht der Deckschicht (A).

In einer anderen bevorzugten Ausführungsform ist die Folie vierschichtig aufgebaut und enthält dann die Bassisschicht (B), die beiden Deckschichten (A) und (C) und die Barrierebeschichtung (D). Die weitere Deckschicht (C) kann dabei genauso aufgebaut sein wie die Deckschicht (A).

In einer weiteren, besonders bevorzugten Ausführungsform enthält die Deckschicht (A) kein Poly(m-xylol-adipinamid) (MXD6), des weiteren nicht mehr als 0,5 Gew.-% eines bestimmten Füllstoffes, z.B. $SiO_2$, und weist eine mittlere Rauigkeit $R_a$ auf, die im Bereich von 10 bis 100 nm liegt. Von Vorteil ist dabei, wenn der mittlere Durchmesser $d_{50}$ der eingesetzten Füllstoffe in einem Bereich von bevorzugt 2,0 bis 5,0 $\mu$m liegt.

Eine solche Deckschicht (A) eignet sich dann ganz besonders für die Auftragung der erfindungsgemäßen Barriereschicht (D), die z.B. in-line (bei der Herstellung der Folie) durch geeignete Verfahren (z.B. reverse gravure) aufgetragen werden kann.

Bei dieser besonders bevorzugten Ausführungsform kann es sich als zweckmäßig erweisen, wenn die zusätzliche Komponente II (Poly(m-xylol-adipinamid) (MXD6) der weiteren Deckschicht (C) zugegeben wird.

Erfindungsgemäß ist die Deckschicht (A) mit einer Barriereschicht (D) beschichtet, die aus einem Blend besteht, der eine filmbildende Substanz, bevorzugt Polyvinylalkohol, und ein Copolymer aus Maleinsäure und Acrylsäure enthält. Das bevorzugte Poly-(Maleinsäure-co-Acrylsäure)-Copolymer (PMA-co-PA) hat ein mittleres Molekulargewicht von 1500 bis 15000, enthält die einzelnen Monomereinheiten in einem Verhältnis von etwa 50:50 und hat eine alternierende Struktur. Konventionelle Blockcopolymere sind nicht bevorzugt. Der Feststoffanteil des erfindungsgemäßen Copolymeren in der Beschichtung beträgt bevorzugt 50 bis 95 Gew.-%, insbesondere 55 bis 90 Gew.-% und besonders bevorzugt 60 bis 85 Gew.-%, bezogen auf die Summe von Copolymer und filmbildender Substanz.

Der Blend der erfindungsgemäßen Beschichtung enthält neben dem Copolymeren eine filmbildende Substanz, welche bevorzugt wasserlöslich ist. Diese Substanz minimiert im wesentlichen die Sprödigkeit der Beschichtung. Eine bevorzugte filmbildende Substanz ist Polyvinylalkohol. Der Feststoffanteil des Polyvinylalkohols bzw. der filmbildenden Substanz in der Beschichtung beträgt bevorzugt 5 bis 50 Gew.-%, insbesondere 10 bis 45 Gew.-% und besonders bevorzugt 15 bis 40 Gew.-%, bezogen auf die Summe von Copolymer und filmbildender Substanz. Das Molekulargewicht des Polyvinylalkohols ist bevorzugt größer als 15000, insbesondere größer als 20000 und besonders bevorzugt größer als 30000.

In einer bevorzugten Ausführungsform enthält die Beschichtung bzw. der Blend noch ein Netzmittel und/oder eine Stärke, wobei letztere bevorzugt wasserlöslich sein sollte.

Weiterhin können der Beschichtung bzw. dem Blend antimikrobiologische Substanzen wie z.B. Triclosan oder Methlylparaben hinzugefügt werden.

Ein bevorzugter Beschichtungsansatz (= Lösung oder Dispersion aus dem erfindungsgemäßen Blend und Wasser) enthält 2 bis 3 Gew.-% Polyvinylalkohol und 7 bis 8 Gew.-% Poly(Maleinsäure-co-Acrylsäure)-Copolymer. Der Anteil an Wasser in dieser Lösung beträgt 50 bis 99 Gew.-%, bevorzugt 80 bis 95 Gew.-%. Gew.-% sind hier jeweils auf die fertige Dispersion/Lösung bezogen.

Für die Dispergierung oder für die Auflösung der erfindungsgemäßen Feststoffe (Blend enthaltend gegebenenfalls weitere Additive) werden bevorzugt Wasser oder Wasser enthaltende Lösungsmittel verwendet. Alternativ können als Lösungsmittel auch Alkohole oder andere geeignete organische Substanzen verwendet werden, alleine oder in Kombination mit Wasser. Der Feststoffanteil in der fertigen Lösung/Dispersion beträgt im allgemeinen bis zu 50 Gew.-%, bevorzugt 0,01 bis 30 Gew.-% und besonders bevorzugt 5 bis 15 Gew.-%

Eine Folie, die mit der erfindungsgemäßen Barriereschicht beschichtet worden ist, ist hervorragend geeignet für die Verpackung von Lebensmitteln, wobei auch ein Kontakt der Beschichtung mit dem Lebensmittel möglich ist. Die beschichtete Folie hat eine ausgezeichnete Resistenz zu Lösungsmitteln als auch zu Wasser. Es wurde z.B. gefunden, dass bei einer zweistündigen Extraktion der erfindungsgemäß beschichteten Folie in 121 °C Wasserdampfatmosphäre keine messbaren Mengen des Coatings extrahiert wurden.

Ein anderer wesentlicher Vorteil der erfindungsgemäßen Beschichtung liegt in ihrer Fähigkeit, gute Barriereeigenschaften schon bei niedrigen Schichtdicken zur Verfügung zu stellen. Dies hat einerseits eine Reduzierung der Kosten zur Folge, und andererseits wird hierdurch die Transparenz der Folie verbessert. Im allgemeinen beträgt die Beschichtungsdicke (D) 0,01 bis 1 $\mu$m, bevorzugt 0,04 bis 0,2 $\mu$m und besonders bevorzugt 0,06 bis 0,15 $\mu$m.

Die Gesamtdicke der erfindungsgemäßen Polyesterfolie kann innerhalb weiter Grenzen variieren und richtet sich nach dem beabsichtigten Verwendungszweck. Sie beträgt in der Regel 6 bis 300 $\mu$m, vorzugsweise 8 bis 200 $\mu$m, besonders bevorzugt 10 bis 100 $\mu$m, wobei die Basisschicht (B) einen Anteil von vorzugsweise 40 bis 99% an der Gesamtdicke hat.

Gegenstand der vorliegenden Erfindung ist auch ein Verfahren zur Herstellung der Folie. Zur Herstellung der Basisschicht (B) werden zweckmäßigerweise die jeweiligen Komponenten (Komponente I = Polyesterhomo- oder Polyestercopolymeres oder Mischungen hiervon, Komponente II = Poly(m-xylol-adipinamid) (MXD6)-Granulat) direkt dem Extruder zugeführt. Die Materialien lassen sich bei etwa 270 bis 300 °C extrudieren. Aus verfahrenstechnischer Sicht (Durchmischung der verschiedenen Polymere) hat es sich dabei als besonders günstig erwiesen, wenn die Extrusion der Polymere für die Basisschicht (B) auf einem Zweischneckenextruder mit Entgasungsmöglichkeit durchgeführt wird.

Die Polymere für die Deckschichten werden zweckmäßig über einen weiteren Extruder dem (Koextrusions-) System zugeführt; auch hier ist prinzipiell der Zweischneckenextruder dem Einschneckenextruder vorzuziehen. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im allgemeinen wird die Streckung in Längsrichtung in einem Temperaturbereich von 80 (Aufheiztemperaturen 80 bis 130 °C) bis 130 °C (Strecktemperaturen 80-130 °C, abhängig vom Streckverhältnis) und die Querstreckung in einem Temperaturbereich von 90 (Beginn der Streckung) bis 140 °C (Ende der Streckung) durchgeführt. Das Längsstreckverhältnis liegt bevorzugt im Bereich von 2,0:1 bis 5,0:1, insbesondere von 2,3:1 bis 4,8:1. Das Querstreckverhältnis liegt bevorzugt im Bereich von 2,5:1 bis 5,0:1, insbesondere von 2,7:1 bis 4,5:1.

Vor der Querstreckung wird zumindest die Oberfläche der Deckschicht (A) der Folie mit der erfindungsgemäßen Barrierebeschichtung (D) bevorzugt in-line beschichtet.

Für die Herstellung einer Folie mit ganz besonders guten optischen Eigenschaften (= sehr niedrige Trübung) und mit einer guten Prozesssicherheit (= wenig Abrisse) hat es sich als günstig erwiesen, wenn die planare Orientierung $\Delta p$ der Folie kleiner ist als $\Delta p = 0{,}160$, bevorzugt kleiner ist als $\Delta p = 0{,}158$ und ganz bevorzugt kleiner ist als $\Delta p = 0{,}156$. Einen wesentlichen Einfluss auf die planare Orientierung $\Delta p$ der fertigen Folie haben die Verfahrensparameter in der Längsstreckung und in der Querstreckung. Zu den wichtigsten die planare Orientierung beeinflussenden Verfahrensparametern gehören die Streckverhältnisse in Längs- und in Querrichtung ($\lambda_{MD}$ und $\lambda_{TD}$) und die Strecktemperaturen in Längs- und in Querrichtung ($T_{MD}$ und $T_{TD}$). Erhält man beispielsweise mit einer Maschine eine planare Orientierung der hergestellten Folie von $\Delta p = 0{,}165$ mit dem Parametersatz $\lambda_{MD} = 4{,}6$ und $\lambda_{TD} = 4{,}0$ und $T_{MD} = 118$ °C und $T_{TD} = 125$ °C, so erhält man durch Erhöhung der Längsstrecktemperatur auf $T_{MD} = 125$ °C oder durch Erhöhung der Querstrecktemperatur auf $T_{TD} = 135$ °C oder durch Absenkung des Längsstreckverhältnisses auf $\lambda_{MD} = 4{,}3$ oder durch Absenkung des Querstreckverhältnisses auf ATD = 3,7 eine planare Orientierung $\Delta p$, die im bevorzugten Bereich liegt. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Der Glanz der Folienoberfläche (A) ist bevorzugt größer als 100, bei einem Einstrahlwinkel von 20°. In einer bevorzugten Ausführungsform beträgt der Glanz dieser Seite mehr als 110 und in einer besonders bevorzugten Ausführungsform mehr als 120. Diese Folienoberfläche eignet sich daher insbesondere für weitere funktionelle Beschichtungen, im vorliegenden Fall für die Beschichtung mit der erfindungsgemäßen Barriereschicht (D), wie sie zuvor beschrieben wurde. Durch den hohen Glanz der Deckschicht (A) (in erster Näherung gleichbedeutend mit einer hohen Glätte der Deckschicht (A)) wird die Funktionsschicht nicht oder nur geringfügig gestört. Es wird z.B. eine gleichmäßige Dickenverteilung der Beschichtung (D) erzielt, wodurch sich schließlich besonders gute physikalische Eigenschaften dieser Schicht einstellen.

Die Trübung der Folie ist bevorzugt kleiner als 20 %. In einer bevorzugten Ausführungsform beträgt die Trübung der Folie weniger als 15% und in einer besonders bevorzugten Ausführungsform weniger als 10%. Durch die geringe Trübung eignet sich die Folie insbesondere für die Verpackungsanwendung.

Ein weiterer Vorteil der Erfindung besteht darin, dass die Herstellungskosten der erfindungsgemäßen Folie nicht wesentlich über denen einer Folie aus Standardpolyesterrohstoffen liegen. Daneben ist bei der Herstellung der Folie gewährleistet, dass Verschnittmaterial, das bei der Folienherstellung im Betrieb immanent anfällt, als Regenerat in einer Menge von bis zu ca. 60 Gew.-%, bevorzugt 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich daneben hervorragend zum Metallisieren oder Vakuumbeschichten mit keramischen Substanzen. Bevorzugt wird die Folie hierbei auf der Seite, die mit der erfindungsgemäßen Beschichtung beschichtet worden ist, metallisiert oder mit keramischen Substanzen beschichtet. Sie zeichnet sich dann ganz besonders durch hervorragende Barriereeigenschaften, nicht nur gegenüber Sauerstoff, sondern auch gegenüber Wasserdampf aus.

Die erfindungsgemäße Folie eignet sich daher insbesondere zum Verpacken von Nahrungs- und Genussmitteln. Die Folie zeichnet sich durch hervorragende Barriereeigenschaften, insbesondere gegenüber Sauerstoff, aus. Darüber hinaus ist sie resistent gegenüber Kontakt mit Feuchtigkeit. Die Barriereschicht (D) lässt sich im Vergleich zu Barriereschichten nach dem Stand der Technik z.B. nicht abwaschen.

Die nachstehende Tabelle (Tabelle 1) fasst die wichtigsten erfindungsgemäßen und bevorzugten Folieneigenschaften noch einmal zusammen, wobei "erfindungsgemäß" bereits als eine bevorzugte Ausführungsform zu verstehen ist.

Tabelle 1

| | Erfindungsgemäß | Bevorzugt | Besonders bevorzugt | Einheit | Messmethode |
|---|---|---|---|---|---|
| Basisschicht B | | | | | |
| Komponente I (= thermoplastischer Polyester) | 60 bis 95 | 65 bis 94 | 70 bis 93 | Gew.-% | |
| Komponente 11 (= Poly (m-xylol-adipinamid) (MXD6) | 5 bis 40 | 6 bis 35 | 7 bis 30 | Gew.-% | |
| Schmelzviskosiät des verwendeten Poly(m-xylol-adipinamid) (MXD6) | < 2000 | < 1800 | < 1600 | Poise | Im Kapillarheometer, 280°C |
| Barrierebeschichtung (D) | | | | | |
| Polyvinylalkohol (Feststoffanteil bezogen auf PVOH + Copolymer) | 5 bis 50 | 10 bis 45 | 15 bis 40 | Gew.-% | |
| Poly(Maleinsäure-co-Acrylsäure) Copolymer (Feststoffanteil bezogen auf PVOH + Copolymer) | 50 bis 95 | 55 bis 90 | 60 bis 85 | Gew.-% | |
| Dicke der Schicht (D) | 0,01 bis 1 | 0,04 bis 0,2 | 0,06 bis 0,15 | $\mu$m | |
| Folieneigenschaften | | | | | |
| Permeationskoeffizient für Sauerstoff | < 25 | < 20 | < 15 | $cm^3$ *[12 $\mu$m]/ ($m^2 \cdot$ bar·d) | DIN 53 380, Teil 3 |
| OTR einer 12 $\mu$m dicken Folie | < 25 . | < 20 | < 15 | $cm^3$/ ($m^2 \cdot$bar·d) | DIN 53 380, Teil 3 |
| Haftung zwischen den Schichten | > 0,5 | > 1,0 | > 1,5 | N/25 mm | wie beschrieben |
| Planare Orientierung $\Delta$p | < 0,160 | < 0,158 | < 0,156 | | wie beschrieben |
| Dicke der Folie | 6 bis 300 | 8 bis 200 | 10 bis 100 | $\mu$m | |
| Trübung der Folie | < 20 | < 15 | < 10 | % | ASTM-D 1003-52 |

**Messmethoden**

Zur Charakterisierung der Rohstoffe und der Folien wurden die folgenden Methoden benutzt:

DIN = Deutsches Institut für Normung
ASTM = American Society for Testing and Materials

(1) Sauerstoffdurchlässigkeit (OTR = Oxygen Transmission Rate)

Die Messung der Sauerstoffbarriere erfolgte mit einem OXTRAN® 100 von Mocon Modern Controls (USA) entsprechend DIN 53 380, Teil 3 (23 °C, 50 % relative Luftfeuchtigkeit auf beiden Seiten der Folie). Die Messung der OTR erfolgte dabei jeweils an 12 $\mu$m dicker Folie.

(2) Trübung

Die Trübung der Folie wurde in Anlehnung an ASTM-D 1003-52 bestimmt.

(3) SV-Wert (standard viscosity)

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6{,}907 \cdot 10^{-4}\ SV\ (DCE) + 0{,}063096$$

(4) Glanz

Der Glanz wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden. Die in den Beispielen angegebenen Messwerte für den Glanz wurden bei einem Einstrahlwinkel von 20° gemessen.

(5) Rauigkeit

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

(6) Planare Orientierung Δp

Die Bestimmung der planaren Orientierung erfolgt über die Messung der Brechungsindizes mit einem Abbe-Refraktometer (Fa. Kruss Optronic, Deutschland). Die planare Orientierung wird dabei stets an der höher glänzenden Seite der Folie gemessen. Die Bestimmung der Brechungsindizes ist bereits ausführlich z.B. in EP-A-0 952 176, Seite 10, wiedergegeben worden. Es wird daher hier ausdrücklich auf diese Schrift Bezug genommen. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (nMD + n_{TD} + n_z)/3$$

(7) Haftung zwischen den Schichten

Das Folienmuster (300 mm längs · 180 mm quer) gemäß der vorliegenden Erfindung wird vor dem Verkleben auf einen glatten Karton (200 mm längs · 180 mm quer; ca. 400 g/m², gebleicht, Außenlagen gestrichen) gelegt, die überstehenden Folienenden sind auf die Rückseite umzuschlagen und mit Klebeband zu fixieren.
Die Verklebung der Folie gemäß der vorliegenden Erfindung mit einer Standardpolyesterfolie von 12 μm Dicke (z.B. Melinex® 800) erfolgt mit einem Rakelgerät und Rakelstab Nr. 3 der Fa. Erichsen (Deutschland), wobei ca. 1,5 ml Klebstoff (Novacote® NC 275+CA 12; Mischverhältnis: 4/1 + 7 Teile Ethylacetat) auf die Barriereschicht (D) der Folie gemäß der vorliegenden Erfindung aufgetragen werden. Nach dem Auslüften des Lösemittels wird die Standardpolyesterfolie mit einer Metallrolle (Breite 200 mm, Durchmesser 90 mm, Masse 10 kg, nach DIN EN 20 535) auf die Barriereschicht (D) der Folie gemäß der vorliegenden Erfindung aufkaschiert. Die Parameter der Kaschierung sind:

| | |
|---|---|
| Klebstoffmenge: | 5 +/- 1 g/m$^2$ |
| Lüften nach Auftrag des Klebers: | 4 min +/- 15 s |
| Rakelstärke (Erichsen): | 3 |
| Geschwindigkeitsstufe des Rakels: | ca. 133 mm/s |
| Aushärtzeit des Verbundes: | 2 h bei 70 °C in einem Umluftofen |

Mit einem 25 +/- 1 mm-Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigem Klebeband mit der Rückseite der Folie gemäß der vorliegenden Erfindung (Basisschicht B oder Deckschicht C) vollflächig auf einem Trägerblech zu fixieren. Die Platte mit dem aufgeklebten Verbund ist in die untere Spannbacke der Zugprüfmaschine einzuspannen. Der Klemmabstand beträgt 100 mm. Das nicht kaschierte Ende der Standard-Polyesterfolie ist so in die obere Spannbacke der Zugprüfmaschine (z.B. Instron®, Zwick) einzuspannen, dass sich ein Schälwinkel von 180° ergibt. Angegeben wird die mittlere Schälkraft in N/25 mm gerundet auf eine Stelle nach dem Komma.

| | |
|---|---|
| Probenbreite | 25 mm |
| Vorkraft: | 0,1 N |
| Messlänge: | 25 mm |
| Abzugsgeschwindigkeit bis Vorkraft: | 25 mm/min |
| Vorweg: | 5 mm |
| Prüfweg: | 40 mm |
| Empfindlichkeit: | 0,01 N |
| Abzugsgeschwindigkeit: | 100 mm/min |

Das Messergebnis für die Schälkraft ist gleichzusetzen mit der minimalen Haftkraft zwischen den Schichten der erfindungsgemäßen Folie, da die Haftkraft zwischen dem Kleber und der Standardfolie deutlich größer ist.

**Beispiele**

Die folgenden Beispiele illustrieren die Erfindung. Die verwendeten Produkte (Marken und Herstellerfirma) sind jeweils nur einmal angegeben und beziehen sich dann auch auf die nachfolgenden Beispiele.

Beispiel 1

Chips aus Polyethylenterephthalat (hergestellt über das Umesterungsverfahren mit Mn als Umesterungskatalysator, Mn-Konzentration im Polymer: 100 ppm; bei einer Temperatur von 150 °C auf eine Restfeuchte von unterhalb 100 ppm getrocknet) und Poly(m-xylol-adipinamid) (MXD6), ebenfalls bei einer Temperatur von 150 °C getrocknet) wurden in einem Mischungsverhältnis von 85:15 dem Extruder (Einschneckenextruder) für die Basisschicht (B) zugeführt. Ebenfalls wurden Chips aus Polyethylenterephthalat und jeweiligen Füllstoffen dem Extruder für die Deckschicht (A) zugeführt. Dann wurde durch Koextrusion zunächst eine zweischichtige Folie mit AB-Aufbau hergestellt. Die Folie wurde in Längsrichtung verstreckt und danach mit der erfindungsgemäßen Barriereschicht (D) beschichtet (mittels reverse gravure). Anschließend wurde die dreischichtige Folie in Querrichtung verstreckt, und es wurde eine transparente, dreischichtige Folie mit DAB-Aufbau und einer Gesamtdicke von 12 μm erhalten. Die Dicke der Deckschicht (A) betrug 2,0 μm.

Barrierebeschichtung (D) aufgebracht auf Deckschicht (A):

| | |
|---|---|
| 7 Gew.-% | PMA-co-PA mit einem mittleren Molekulargewicht von 3000 der Fa. Sigma-Aldrich, Milwaukee, Wisconsin, USA (Produktname: 41605-3) |
| 3 Gew.-% | Polyvinylalkohol der Fa. Celanese Ltd., USA (Produktname: Celvol® 305, M$_w$ = 31000 bis 50000) |

Deckschicht (A):

100 Gew.-%    Polyesterrohstoff 4023 der Fa. KoSa, Deutschland mit einem SV-Wert von 800, bestehend aus 99,9 Gew.-% Polyethylenterephthalat und 0,1 Gew.-% Kieselsäurepartikel (Sylysia® 320 von der Fa. Fuji/Japan) mit einem $d_{50}$-Wert von 2,5 $\mu$m

Basisschicht (B):

85,0 Gew.-%    Polyethylenterephthalat 4023 der Fa. KoSa mit einem SV-Wert von 800

15 Gew.-%    Poly(m-xylol-adipinamid) (MXD6) der Fa. Mitsubishi Gas Chemical Co., Produktname Nylon MXD6 6001 mit einer Schmelzviskosität von 1400 Poise

Die Herstellungsbedingungen in den einzelnen Verfahrensschritten waren:

| | | | | |
|---|---|---|---|---|
| Extrusion | Temperaturen | A-Schicht: | 290 | °C |
| | | B-Schicht: | 290 | °C |
| | Temperatur der Abzugswalze | | 25 | °C |
| Längsstreckung: | Strecktemperatur: | | 125 | °C |
| | Längsstreckverhältnis: | | 4,0 | |
| Querstreckung: | Strecktemperatur: | | 130 | °C |
| | Querstreckverhältnis | | 3,9 | |
| Fixierung: | Temperatur: | | 230 | °C |
| | Dauer: | | 3 | s |

Die Oberfläche der Deckschicht (A) hatte den geforderten hohen Glanz, die Folie die geforderte niedrige Trübung und die geforderte niedrige OTR. Weiterhin konnte die Folie sehr gut, d.h. abrissfrei, hergestellt werden und zeigte außerdem das gewünschte Verarbeitungsverhalten.

Beispiel 2

Im Vergleich zu Beispiel 1 wird jetzt durch Koextrusion eine zunächst dreischichtige Folie mit ABC-Aufbau hergestellt. Die beiden Schichten (A) und (B) wurden dabei im Vergleich zu Beispiel 1 nicht geändert. Es wurden des weiteren Chips aus Polyethylenterephthalat und einem Füllstoff dem Extruder (Zweischneckenextruder) für die Deckschicht (C) zugeführt. Die Folie wurde in Längsrichtung verstreckt und danach mit der erfindungsgemäßen Barriereschicht (D) beschichtet (mittels reverse gravure). Anschließend wurde die vierschichtige Folie in Querrichtung verstreckt, und es wurde eine transparente, vierschichtige Folie mit DABC-Aufbau und einer Gesamtdicke von 12 $\mu$m erhalten. Die Dicke der Deckschichten (A) und (C) betrugen jeweils 2,0 $\mu$m.

Deckschicht (C):

100 Gew.-%    Polyesterrohstoff 4023 von Fa. KoSa mit einem SV-Wert von 800, bestehend aus 99 Gew.-% Polyethylenterephthalat 4023 der Fa. KoSa und 1,0 Gew.-% Kieselsäurepartikel (Sylysia 320 von der Fa. Fuji/Japan) mit einem $d_{50}$-Wert von 2,5 $\mu$m

Die Herstellungsbedingungen in den einzelnen Verfahrensschritten waren ähnlich zu denjenigen wie in Beispiel 1. Die Oberfläche der Deckschicht (A) hatte den geforderten hohen Glanz, die Folie die geforderte niedrige Trübung und die geforderte niedrige OTR. Weiterhin konnte die Folie sehr gut, d.h. abrissfrei, hergestellt werden und zeigte außerdem das gewünschte Verarbeitungsverhalten.

Vergleichsbeispiel VB1

Es wurde eine Folie entsprechend Beispiel 1 der JP 2001-347592 hergestellt. Die Rauigkeitswerte dieser Folie sind viel zu hoch und der Glanz der Folie liegt nicht im erfindungsgemäßen Bereich.

Die Eigenschaften und der Aufbau der gemäß den Beispielen und den Vergleichsbeispielen hergestellten Folien sind in Tabelle 2 zusammengestellt.

Tabelle 2

| Beispiele | Folien-dicke | Folien-Aufbau | Dicke der Barriereschicht (D) | Poly(m-xylol-adipinamid) (MXD6) Anteil in Basis-schicht (B) | Poly(m-xylol-adipinamid) (MXD6) Anteil in Deck-schicht (A) | Glanz der Oberfläche (A) (20°) | Rauigkeit $R_a$ der Oberfläche (A) | Planare Orientierung $\Delta p$ | OTR | Haftung zwischen den Schichten A und B | Trübung der Folie |
|---|---|---|---|---|---|---|---|---|---|---|---|
| | $\mu$m | | $\mu$m | Gew.% | Gew.-% | | $\mu$m | - | $cm^3/m^2 \cdot bar \cdot d$ | N/25 mm | % |
| Beispiel 1 | 12 | DAB | 0,1 | 15 | 0 | 160 | 40 | 0,154 | 13 | 1,0 | 6 |
| Beispiel 2 | 12 | DABC | 0,1 | 15 | 0 | 170 | 40 | 0,154 | 13 | 1,0 | 5 |
| VB 1 | 12 | B | | 20 | - | 65 | 170 | | 22 | | 8 |

**Patentansprüche**

1. Polyesterfolie, die eine Basisschicht (B) und mindestens eine auf dieser Basisschicht (B) aufgebrachte Deckschicht (A) aufweist, die mit einer Barriereschicht (D) beschichtet ist, **dadurch gekennzeichnet, dass** die Basisschicht (B) Poly(m-xylol-adipinamid) enthält und die Barriereschicht (D) aus einem Blend besteht, der eine filmbildende Substanz und ein Copolymer aus Maleinsäure und Acrylsäure enthält.

2. Polyesterfolie nach Anspruch 1, **dadurch gekennzeichnet, dass** die Basisschicht (B) 5 bis 40 Gew.-% Poly(m-xylol-adipinamid) enthält, bezogen auf das Gewicht der Basisschicht (B).

3. Polyesterfolie nach Anspruch 1 oder 2, **dadurch gekennzeichnet, dass** die Deckschicht (A) Poly(m-xylol-adipinamid) enthält.

4. Polyesterfolie nach einem oder mehreren der Ansprüche 1 bis 3, **dadurch gekennzeichnet, dass** die Schmelzviskosität des Poly(m-xylol-adipinamid) kleiner als 2000 Poise ist.

5. Polyesterfolie nach einem oder mehreren der Ansprüche 1 bis 4, **dadurch gekennzeichnet, dass** die Basisschicht (B) thermoplastischen Polyester, bevorzugt zu mindestens 60 Gew.-%, enthält.

6. Polyesterfolie nach einem oder mehreren der Ansprüche 1 bis 5, **dadurch gekennzeichnet, dass** der thermoplastische Polyester der Basisschicht (B) Ethlenglykol- und Terephthalsäure- und/oder Ethylenglykol- und Naphthalin-2,6-dicarbonsäure-Einheiten aufweist.

7. Polyesterfolie nach einem oder mehreren der Ansprüche 1 bis 6, **dadurch gekennzeichnet, dass** der Polyester der Basisschicht (B) Isophthalsäure-, Terephthalsäure- und Ethylenglykol-Einheiten aufweist.

8. Polyesterfolie nach einem oder mehreren der Ansprüche 1 bis 7, **dadurch gekennzeichnet, dass** als Polyester der Basisschicht (B) Polyethylenterephthalat verwendet wird.

9. Polyesterfolie nach einem oder mehreren der Ansprüche 1 bis 8, **dadurch gekennzeichnet, dass** als filmbildende Substanz für die Barriereschicht (D) Polyvinylalkohol verwendet wird.

10. Polyesterfolie nach einem oder mehreren der Ansprüche 1 bis 9, **dadurch gekennzeichnet, dass** der Polyvinylalkohol ein Molekulargewicht von größer als 15000 aufweist.

11. Polyesterfolie nach einem oder mehreren der Ansprüche 1 bis 10, **dadurch gekennzeichnet, dass** das Copolymer aus Maleinsäure und Acrylsäure der Barriereschicht (D) ein mittleres Molekulargewicht von 1500 bis 15000 aufweist.

12. Polyesterfolie nach einem oder mehreren der Ansprüche 1 bis 11, **dadurch gekennzeichnet, dass** die Folie einen D-A-B-C Schichtaufbau aufweist, wobei A und C Deckschichten sind, die gleich oder verschieden sein können.

13. Polyesterfolie nach einem oder mehreren der Ansprüche 1 bis 12, **dadurch gekennzeichnet, dass** die Deckschichten (A) und/oder (C) den für die Basisschicht (B) verwendeten Polyester enthalten.

14. Polyesterfolie nach einem oder mehreren der Ansprüche 1 bis 13, **dadurch gekennzeichnet, dass** die Deckschicht (A) einen Glanz von größer als 100 aufweist.

15. Polyesterfolie nach einem oder mehreren der Ansprüche 1 bis 14, **dadurch gekennzeichnet, dass** die Folie eine Sauerstoffdurchlässigkeit (OTR) von kleiner als 25 cm$^3 \cdot$ m$^{-2} \cdot$ d$^{-1} \cdot$ bar$^{-1}$ aufweist.

16. Polyesterfolie nach einem oder mehreren der Ansprüche 1 bis 15, **dadurch gekennzeichnet, dass** die Folie eine Trübung von kleiner als 20 % aufweist.

17. Polyesterfolie nach einem oder mehreren der Ansprüche 1 bis 16, **dadurch gekennzeichnet, dass** die Haftung zwischen den Folienschichten größer als 0,5 N/25 mm ist.

18. Verfahren zur Herstellung einer Polyesterfolie nach einem oder mehreren der Ansprüche 1 bis 17, umfassend die Schritte

a) Herstellen einer mehrschichtigen Folie durch Koextrusion,
b) Längsstrecken der Folie,
c) Beschichten der Folie mit der Barriereschicht (D),
d) Querstrecken der beschichteten Folie und
e) Thermofixieren der gestreckten Folie.

19. Verwendung einer Polyesterfolie nach einem oder mehreren der Ansprüche 1 bis 17 als Verpackungsmaterial, insbesondere für Nahrungs- und Genussmittel.

**Claims**

1. A polyester film which has a base layer (B) and has, applied to this base layer (B), at least one overlayer (A) which has been coated with a barrier layer (D), wherein the base layer (B) comprises poly (m-xyleneadipamide), and the barrier layer (D) is composed of a blend in which a film-forming substance and a copolymer of maleic acid and acrylic acid are present.

2. The polyester film as claimed in claim 1, wherein the base layer (B) comprises from 5 to 40 % by weight of poly(m-xyleneadipamide), based on the weight of the base layer (B).

3. The polyester film as claimed in claim 1 or 2, wherein the overlayer (A) comprises poly(m-xyleneadipamide).

4. The polyester film as claimed in one or more of claims 1 to 3, wherein the melt viscosity of the poly(m-xyleneadipamide) is smaller than 2000 poises.

5. The polyester film as claimed in one or more of claims 1 to 4, wherein the base layer (B) comprises thermoplastic polyester, preferably at least 60 % by weight thereof.

6. The polyester film as claimed in one or more of claims 1 to 5, wherein the thermoplastic polyester of the base layer (B) has ethylene glycol units and terephthalic acid units, and/or ethylene glycol units and naphthalene-2,6-dicarboxylic acid units.

7. The polyester film as claimed in one or more of claims 1 to 6, wherein the polyester of the base layer (B) has isophthalic acid units, terephthalic acid units, and ethylene glycol units.

8. The polyester film as claimed in one or more of claims 1 to 7, wherein polyethylene terephthalate is used as polyester of the base layer (B).

9. The polyester film as claimed in one or more of claims 1 to 8, wherein polyvinyl alcohol is used as film-forming substance for the barrier layer (D).

10. The polyester film as claimed in one or more of claims 1 to 9, wherein the polyvinyl alcohol has a molecular weight greater than 15000.

11. The polyester film as claimed in one or more of claims 1 to 10, wherein the copolymer of maleic acid and acrylic acid in the barrier layer (D) has an average molecular weight of from 1500 to 15000.

12. The polyester film as claimed in one or more of claims 1 to 11, which has a D-A-B-C layer structure, A and C being overlayers which may be identical or different.

13. The polyester film as claimed in one or more of claims 1 to 12, wherein the overlayers (A) and/or (C) comprise the polyester used for the base layer (B).

14. The polyester film as claimed in one or more of claims 1 to 13, wherein the overlayer (A) has a gloss greater than 100.

15. The polyester film as claimed in one or more of claims 1 to 14, which has an oxygen transmission (OTR) smaller than 25 $cm^3 \cdot m^{-2} \cdot d^{-1} \cdot bar^{-1}$.

**16.** The polyester film as claimed in one or more of claims 1 to 15, which has a haze smaller than 20 %.

**17.** The polyester film as claimed in one or more of claims 1 to 16, wherein the adhesion between the layers of the film is greater than 0.5 N/25 mm.

**18.** A process for producing a polyester film as claimed in one or more of claims 1 to 17, encompassing the steps of

    a) production of a multilayer film by coextrusion,
    b) longitudinal stretching of the film,
    c) coating of the film with the barrier layer (D),
    d) transverse stretching of the coated film, and
    e) heat-setting of the stretched film.

**19.** The use of a polyester film as claimed in one or more of claims 1 to 17 as a packaging material, in particular for foods or other consumable items.

**Revendications**

**1.** Film de polyester comportant une couche de base (B) et, appliquée sur cette couche de base (B), au moins une couche de recouvrement (A) qui est revêtue d'une couche barrière (D), **caractérisé en ce que** la couche de base (B) contient du poly(m-xylène-adipamide) et la couche barrière (D) consiste en un mélange qui contient une substance filmogène et un copolymère d'acide maléique et acide acrylique.

**2.** Film de polyester selon la revendication 1, **caractérisé en ce que** la couche de base (B) contient de 5 à 40 % en poids de poly(m-xylène-adipamide), par rapport au poids de la couche de base (B).

**3.** Film de polyester selon la revendication 1 ou 2, **caractérisé en ce que** la couche de recouvrement (A) contient du poly(m-xylène-adipamide).

**4.** Film de polyester selon une ou plusieurs des revendications 1 à 3, **caractérisé en ce que** la viscosité à chaud du poly(m-xylène-adipamide) est inférieure à 2 000 poises.

**5.** Film de polyester selon une ou plusieurs des revendications 1 à 4, **caractérisé en ce que** la couche de base (B) contient un polyester thermoplastique, de préférence à raison d'au moins 60 % en poids.

**6.** Film de polyester selon une ou plusieurs des revendications 1 à 5, **caractérisé en ce que** le polyester thermoplastique de la couche de base (B) comporte des motifs éthylèneglycol et acide téréphtalique et/ou éthylèneglycol et acide naphtalène-2,6-dicarboxylique.

**7.** Film de polyester selon une ou plusieurs des revendications 1 à 6, **caractérisé en ce que** le polyester de la couche de base (B) comporte des motifs acide isophtalique, acide téréphtalique et éthylèneglycol.

**8.** Film de polyester selon une ou plusieurs des revendications 1 à 7, **caractérisé en ce qu'**on utilise comme polyester de la couche de base (B) du poly(éthylène-téréphtalate).

**9.** Film de polyester selon une ou plusieurs des revendications 1 à 8, **caractérisé en ce qu'**on utilise comme substance filmogène pour la couche barrière (D) du poly(alcool vinylique).

**10.** Film de polyester selon une ou plusieurs des revendications 1 à 9, **caractérisé en ce que** le poly(alcool vinylique) a une masse moléculaire supérieure à 15 000.

**11.** Film de polyester selon une ou plusieurs des revendications 1 à 10, **caractérisé en ce que** le copolymère d'acide maléique et acide acrylique de la couche barrière (D) a une masse moléculaire moyenne de 1 500 à 15 000.

**12.** Film de polyester selon une ou plusieurs des revendications 1 à 11, **caractérisé en ce que** le film présente une structure de couches D-A-B-C, A et C étant des couches de recouvrement qui peuvent être identiques ou différentes.

**13.** Film de polyester selon une ou plusieurs des revendications 1 à 12, **caractérisé en ce que** les couches de recouvrement (A) et/ou (C) contiennent le polyester utilisé pour la couche de base (B).

**14.** Film de polyester selon une ou plusieurs des revendications 1 à 13, **caractérisé en ce que** la couche de recouvrement (A) présente un brillant supérieur à 100.

**15.** Film de polyester selon une ou plusieurs des revendications 1 à 14, **caractérisé en ce que** le film présente une perméabilité à l'oxygène (OTR) de moins de 25 $cm^3 \cdot m^{-2} \cdot d^{-1} \cdot bar^{-1}$.

**16.** Film de polyester selon une ou plusieurs des revendications 1 à 15, **caractérisé en ce que** le film présente une opacité inférieure à 20 %.

**17.** Film de polyester selon une ou plusieurs des revendications 1 à 16, **caractérisé en ce que** l'adhérence entre les couches du film est supérieure à 0,5 N/25 mm.

**18.** Procédé pour la fabrication d'un film de polyester selon une ou plusieurs des revendications 1 à 17, comprenant les étapes suivantes

    a) production d'un film multicouche par coextrusion,
    b) étirage longitudinal du film,
    c) revêtement du film avec la couche barrière (D),
    d) étirage transversal du film revêtu et
    e) thermofixage du film étiré.

**19.** Utilisation d'un film de polyester selon une ou plusieurs des revendications 1 à 17, en tant que matériau d'emballage, en particulier pour produits alimentaires et autres produits de consommation.

D - Barrierebeschichtung

A - Polyester (+MXD6)

B - Polyester + MXD6

**Fig. 1**

D - Barrierebeschichtung

A - Polyester (+MXD6)

B - Polyester + MXD6

C - Polyester (+MXD6)

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9962694 A
- JP 2001347592 A
- EP 0675158 B
- WO 0238673 A
- JP 6064098 A
- EP 0602964 A
- EP 0952176 A